Europäisches Patentamt

**European Patent Office**

Office européen des brevets

(11) Veröffentlichungsnummer: **0 172 547**
A1

(12) **EUROPÄISCHE PATENTANMELDUNG**

(21) Anmeldenummer: **85110337.4**

(22) Anmeldetag: **19.08.85**

(51) Int. Cl.⁴: **F 16 B 13/08**

(30) Priorität: **25.08.84 DE 3431342**

(43) Veröffentlichungstag der Anmeldung:
**26.02.86 Patentblatt 86/9**

(84) Benannte Vertragsstaaten:
**AT CH FR GB IT LI NL SE**

(71) Anmelder: **Zondler, Sylvia**
**Bergstrasse 28**
**D-7424 Heroldstatt(DE)**

(72) Erfinder: **Zondler, Sylvia**
**Bergstrasse 28**
**D-7424 Heroldstatt(DE)**

(74) Vertreter: **Patentanwälte Phys. Bartels Dipl.-Ing. Fink**
**Dr.-Ing. Held**
**Lange Strasse 51**
**D-7000 Stuttgart 1(DE)**

(54) **Dübel.**

(57) Auf einer Dübelhülse (1) oder einem Dübelbolzen oder einem Dübelkonus (10) eines Dübels ist ein Schneidring (2) oder sind Schneidsegmente aufgestülpt, gepresst, gelötet oder anders befestigt.

Fig.1

EP 0 172 547 A1

16.August 1985/353708          $-1-$

P 6972

BEZEICHNUNG GEÄNDERT
Siehe Titelseite

Sylvia Zondler, Bergstraße 28, 7424 Heroldstatt

### "Aufsatzdübel"

Die Erfindung hat sich zur Aufgabe gemacht, Dübel, die aus nicht härtbarem Material hergestellt sind, oder beispielsweise wegen der Bruchgefahr am Gewinde nicht ganz gehärtet sein dürfen mit einer aufgesetzten Schneide zu versehen, damit sie sich beim Eintreibvorgang ein konisches Loch schaffen.

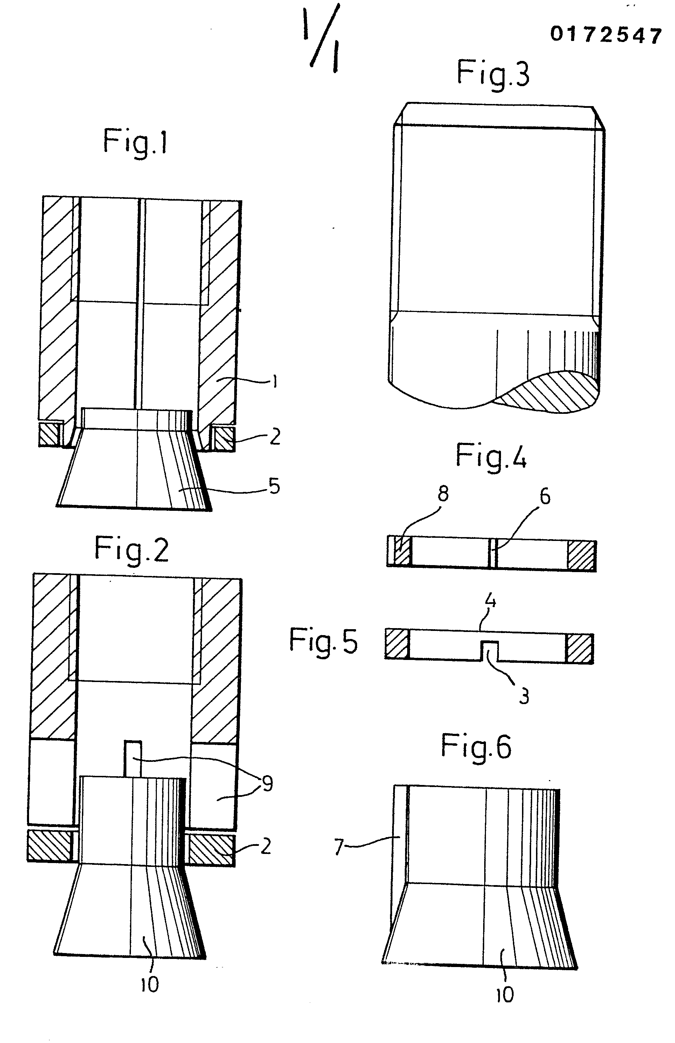

Der Dübel kann die Form einer längsgeschlitzten Hülse 1 Bild I haben, auf dieser sitzt der gehärtete Schneidring 2. Dieser kann als geschlossener Ring wie im Bild V ausgebildet sein und einen oder mehrere Schlitze 3 aufweisen. Beim Eintreiben bricht die Sollbruchstelle 4 und ermöglicht das Abgleiten über den Konus 5. Der Schneidring kann auch gemäß Bild IV ausgebildet sein und einen durchgehenden Längsschlitz 6 aufweisen oder aber auch zudem einen oder mehrere Schlitze 3 haben. Der Konus kann auch gemäß Bild VI eine Nase 7 aufweisen, die in die Nute 8 und in einen Schlitz 9 gemäß Bild 2 eingreift um eine Verdrehung des Ringes zu verhindern. Solche Schlitze 9 kann auch der Dübel nach dem Bild I haben. Zudem kann der Dübel in Form eines Stehbolzens mit Außengewinde gemäß des Bildes III ausgeführt sein, wobei sich an den massiven Gewindeteil ein gewindeloser Hülsenteil entsprechend Fig.2 anschließt. Bei der Ausführung gemäß des Bildes II ist die Hülse nicht längsgeschlitzt und weist einen oder mehrere Schlitze 9 auf.
Der Schneidring 2 kann auch gemäß dem Bild II auf dem Konus 10 sitzen. Sowohl die Schneidringe IV und V als auch die Konen 5 und 10 können auf den Hülsen I und II oder auf dem Bolzen III sitzen.

- 2 -

P 6972

Sylvia Zondler, Bergstraße 28, 7424 Heroldstatt

<u>A n s p r u c h</u>

1. Aufsatzdübel, dadurch g e k e n n z e i c h n e t, daß auf einer Dübelhülse I oder II oder einem Dübelbolzen III oder einem Dübelkonus VI ein Schneidring IV oder V oder Schneidsegmente aufgestülpt, gepresst, gelötet oder anders befestigt sind.

1/1

Fig.1

Fig.2

Fig.3

Fig.4

Fig.5

Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-2 707 897  (BEESON) <br> * Spalte 2, Zeile 15 - Spalte 3, Zeile 8; Figuren 1-6 * | 1 | F 16 B   13/08 |
| | --- | | |
| X | EP-A-0 102 914  (UPAT) <br> * Ansprüche; Figur 1 * | 1 | |
| | ----- | | |

**RECHERCHIERTE SACHGEBIETE (Int. Cl 4)**

B 23 B
F 16 B

Der vorliegende Recherchenbericht wurde für alle Patentansprüche erstellt.

| Recherchenort <br> DEN HAAG | Abschlußdatum der Recherche <br> 08-10-1985 | Prüfer <br> VAN DER WAL W |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82